# EUROPEAN PATENT APPLICATION

(11) **EP 4 354 568 A1**
(43) Date of publication of application: **17.04.2024**
(21) Application number: 23163928.7
(22) Date of filing: 24.03.2023
(51) Int. Cl.: H01M 10/04, H01M 50/533, H01M 50/538, H01M 50/60, H01M 50/609

(54) **CYLINDRICAL BATTERY**

(30) Priority: 13.10.2022 CN 202211258242
(71) Applicant: CALB Group Co., Ltd., Changzhou City, Jiangsu Province (CN)
(72) Inventor: QI, Binwei, Luoyang City (CN); WANG, Yawei, Changzhou City (CN); SUN, Qianqian, Changzhou City (CN); ZHANG, Lulu, Changzhou City (CN)
(74) Representative: Becker, Eberhard

(57) **Abstract**

The disclosure relates to the technical field of batteries and provides a cylindrical battery including: a battery casing (10); and a winding cell (20) disposed in the battery casing (10) and including a cell body (21) and a first tab portion (22). The first tab portion (22) extends from one side of the cell body (21), and the cell body (21) is formed with a winding cell hole (211). Herein, in a radial direction of the winding cell hole (211), the first tab portion (22) includes a plurality of first tabs. The first tab among the plurality of first tabs closest to the winding cell hole (211) is a 1^{st} first tab (221). A distance between the 1^{st} first tab (221) and the winding cell hole (211) is not less than a length of the 1^{st} first tab (221) in a lead-out direction thereof.

## Description

### BACKGROUND

### Technical Field

The disclosure relates to the technical field of batteries, and in particular, relates to a cylindrical battery.

### Description of Related Art

In the related art, the cells of cylindrical batteries are formed by winding. During the formation or use of the cells, due to the size limitation of the tabs, the risk of short circuit may occur.

### SUMMARY

The disclosure provides a cylindrical battery including a battery casing and a winding cell.

The winding cell is disposed in the battery casing and includes a cell body and a first tab portion. The first tab portion extends from one side of the cell body, and the cell body is formed with a winding cell hole.

Herein, in a radial direction of the winding cell hole, the first tab portion includes a plurality of first tabs. The first tab among the plurality of first tabs closest to the winding cell hole is a 1^{st} first tab. A distance between the 1^{st} first tab and the winding cell hole is not less than a length of the 1^{st} first tab in a lead-out direction thereof.

### BRIEF DESCRIPTION OF THE DRAWINGS

For a better understanding of the disclosure, reference may be made to exemplary embodiments shown in the following drawings. The components in the drawings are not necessarily to scale and related elements may be omitted, or in some instances proportions may have been exaggerated, so as to emphasize and clearly illustrate the features described herein. In addition, related elements or components can be variously arranged, as known in the art. Further, in the drawings, like reference numerals designate same or like parts throughout the several views.
FIG. 1 is a schematic view illustrating a structure of a battery according to an exemplary embodiment.
FIG. 2 is a schematic view illustrating a structure of a winding cell of the battery according to an exemplary embodiment.
FIG. 3 is a schematic view illustrating the structure of the winding cell of the battery according to another exemplary embodiment.
FIG. 4 is a cross-sectional schematic view illustrating the structure of the winding cell of the battery according to an exemplary embodiment.
FIG. 5 is a schematic view illustrating part of a structure of stacked units of the battery according to an exemplary embodiment.
FIG. 6 is a cross-sectional schematic view illustrating a winding structure of the stacked units of the battery according to an exemplary embodiment,
FIG. 7 is a cross-sectional schematic view illustrating the winding structure of the stacked units of the battery according to another exemplary embodiment.

### DESCRIPTION OF THE EMBODIMENTS

The technical solutions in the exemplary embodiments of the disclosure will be described clearly and explicitly in conjunction with the drawings in the exemplary embodiments of the disclosure. The description proposed herein is just the exemplary embodiments for the purpose of illustrations only, not intended to limit the scope of the disclosure, so it should be understood that and various modifications and variations could be made thereto without departing from the scope of the disclosure.

In the description of the present disclosure, unless otherwise specifically defined and limited, the terms "first", "second" and the like are only used for illustrative purposes and are not to be construed as expressing or implying a relative importance. The term "plurality" is two or more. The term "and/or" includes any and all combinations of one or more of the associated listed items.

In particular, a reference to "the" object or "a" and "an" object is intended to denote also one of a possible plurality of such objects. Unless otherwise defined or described, the terms "connect", "fix" should be broadly interpreted, for example, the term "connect" can be "fixedly connect", "detachably connect", "integrally connect", "electrically connect" or "signal connect". The term "connect" also can be "directly connect" or "indirectly connect via a medium". For the persons skilled in the art, the specific meanings of the abovementioned terms in the present disclosure can be understood according to the specific situation.

Further, in the description of the present disclosure, it should be understood that spatially relative terms, such as "above", "below" "inside", "outside" and the like, are described based on orientations illustrated in the figures, but are not intended to limit the exemplary embodiments of the present disclosure.

In the context, it should also be understood that when an element or features is provided "outside" or "inside" of another element(s), it can be directly provided "outside" or "inside" of the other element, or be indirectly provided "outside" or "inside" of the another element(s) by an intermediate element.

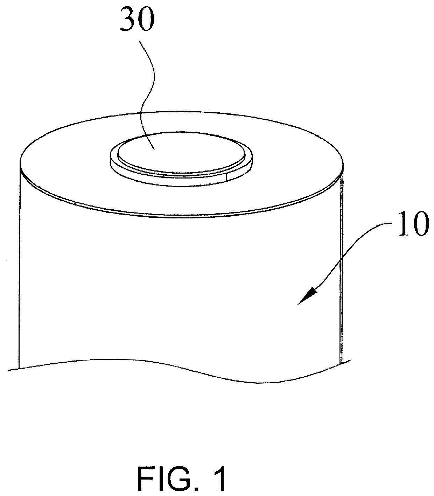

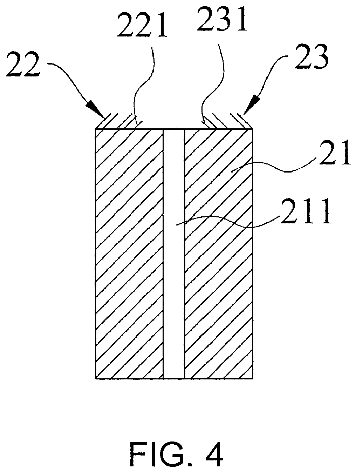

An embodiment of the disclosure provides a cylindrical battery. With reference to FIG. 1 to FIG. 5, the cylindrical battery includes a battery casing 10 and a winding cell 20. The winding cell 20 is disposed in the battery casing 10 and includes a cell body 21 and a first tab portion 22. The first tab portion 22 extends from one side of the cell body 21, and the cell body 21 is formed with a winding cell hole 211. Herein, in a radial direction of the winding cell hole 211, the first tab portion 22 is formed by a plurality of first tabs gathered and connected together. The first tab among the plurality of first tabs closest to the winding cell hole 211 is a 1^{st} first tab 221. A distance between the 1^{st} first tab 221 and the winding cell hole 211 is not less than a length of the 1^{st} first tab 221 in a lead-out direction thereof.

The cylindrical battery provided by an embodiment of the disclosure includes the battery casing 10 and the winding cell 20. The winding cell 20 is disposed in the battery casing 10 and includes the cell body 21 and the first tab portion 22. The first tab portion 22 extends from one side of the cell body 21, and the cell body 21 is formed with the winding cell hole 211. The first tab portion 22 may be formed by a plurality of first tabs. By making the distance between the 1^{st} first tab 221 and the winding cell hole 211 not less than the length of the 1^{st} first tab 221 in the lead-out direction thereof, the 1^{st} first tab 221 is prevented from extending and blocking the winding cell hole 211 after being bundled, and the electrolyte infiltration rate of the winding cell 20 is also prevented from being affected. Further, the safety risk caused by wrong lapping with tabs or electrode pieces of different polarities is also prevented, and the safety performance of the cylindrical battery is thus improved.

It should be noted that the cylindrical battery is a wound battery, and the winding cell 20 may be wound on a winding cell rod body 216. In this way, after the winding cell 20 is formed by winding, the winding cell rod body 216 is separated from the winding cell 20, and the winding cell hole 211 is formed. The first tab portion 22 on the battery cell body 21 is not present at the initial stage of winding, but only be presented after a certain number of turns of winding. In this way, it is ensured that the distance between the 1^{st} first tab 221 and the winding cell hole 211 is greater than or equal to the length of the 1^{st} first tab 221 in the lead-out direction thereof, and short-circuit connection with other structures after the 1^{st} first tab 221 is bundled is thus prevented from occurring.

The cell body 21 may include a first electrode piece, and the first tab portion 22 may extend from one end of the first electrode piece. Therefore, after the first electrode piece is wound, the first tab portion 22 is formed on the first electrode piece. In the radial direction of the winding cell hole 211, the first tab portion 22 may be formed by multiple layers of first tabs, and each layer of first tabs may include one or more first tabs. In this embodiment, in the radial direction of the winding cell hole 211, the first tab portion 22 includes a plurality of first tabs. That is, the key point is to determine the 1^{st} first tab 221, without considering how many first tabs there are in each layer of first tabs. The radial direction of the winding cell hole 211 is a direction extending from the center point of the winding cell hole 211 to the peripheral outer edge of the winding cell hole 211. Therefore, there are multiple radial directions of the winding cell hole 211. It is herein to illustrate that in one radial direction of the winding cell hole 211, the first tab portion 22 includes a plurality of first tabs.

The first tabs on the first electrode piece may be a whole. That is, after the first electrode piece is wound, the first tab portion 22 formed by the first tabs as a whole is in the shape of a ring. Herein, the first tabs of the first tabs of each layer are connected. Alternatively, the first tabs on the first electrode piece may be independently arranged. Therefore, after the first electrode piece is wound, the first tab portion 22 formed by the plurality of independently arranged first tabs forms a circumferential non-closed structure.

The first tabs on the first electrode piece are in a fluffy state after being wound. Therefore, each first tab may be bundled so as to ensure that the first tabs may form reliable contact, and the current-passing capability of the first tab portion 22 is thus ensured.

Regarding the length of the 1^{st} first tab 221 in the lead-out direction thereof, the 1^{st} first tab 221 extends from one side of the cell body 21. The lead-out direction of the 1^{st} first tab 221 may be treated as an extending direction of the 1^{st} first tab 221 after the 1^{st} first tab 221 is straightened. That is, the extending direction of the 1^{st} first tab 221 is parallel to an axial direction of the winding cell hole 211. After the 1^{st} first tab 221 is straightened, the length dimension of the 1^{st} first tab 221 in the axial direction of the winding cell hole 211 is the length of the 1^{st} first tab 221 in the lead-out direction thereof.

The distance between the 1^{st} first tab 221 and the winding cell hole 211 is a distance between a bottom end of the 1^{st} first tab 221 connected to the cell body 21 and a hole wall of the winding cell hole 211. Therefore, only when the distance between the 1^{st} first tab 221 and the winding cell hole 211 is ensured to be greater than or equal to the length of the 1^{st} first tab 221 in the lead-out direction thereof can it be ensured that the 1^{st} first tab 221 may not block the winding cell hole 211 after being bundled.

In an embodiment, the distance between the 1^{st} first tab 221 and the winding cell hole 211 is 3 mm to 10 mm. On the basis of ensuring a reliable distance between the 1^{st} first tab 221 and the hole wall of the winding cell hole 211, the problem of the small length dimension of the first tab portion 22 in the radial direction of the winding cell hole 211 may also be prevented from occurring. Therefore, it is ensured that the first tab portion 22 may have a reliable current-passing capability, and the safe use performance of the cylindrical battery is thus improved.

The distance between the 1^{st} first tab 221 and the winding cell hole 211 may be 3 mm, 3.1 mm, 3.2 mm, 3.5 mm, 3.8 mm, 4 mm, 4.5 mm, 5 mm, 5.5 mm, 6 mm, 7 mm, 7.5 mm, 8 mm, 8.5 mm, 9 mm, 9.3 mm, 9.5 mm, 9.6 mm, 9.8 mm, 9.9 mm, or 10 mm, etc.

When the distance between the 1^{st} first tab 221 and the winding cell hole 211 is less than 3 mm, the distance between the first tab portion 22 and the winding cell hole 211 may be too small. Further, the current-passing area of the first tab portion 22 may be insufficient, the first tab portion 22 may be difficult to be welded, and the risk of insulation failure may occur. When the distance between the 1^{st} first tab 221 and the winding cell hole 211 is greater than 10mm, the distance between the first tab portion 22 and the winding cell hole 211 may be too large. Since the front end of the cell body 21 does not lead out the first tab portion 22, the electron transmission rate of the whole winding cell 20 is thus affected.

In an embodiment, the length of the 1^{st} first tab 221 in the lead-out direction thereof may be 3 mm to 10 mm. On the basis of ensuring that the 1^{st} first tab 221 may not block the winding cell hole 211 after being bundled, the 1^{st} first tab 221 may have a reasonable length, so as to ensure the current-passing capability of the first tab portion 22.

The length of the 1^{st} first tab 221 in the lead-out direction thereof may be 3 mm, 3.1 mm, 3.2 mm, 3.5 mm, 3.8 mm, 4 mm, 4.5 mm, 5 mm, 5.5 mm, 6 mm, 7 mm, 7.5 mm, 8 mm, 8.5 mm, 9 mm, 9.3 mm, 9.5 mm, 9.6 mm, 9.8 mm, 9.9 mm, or 10 mm, etc.

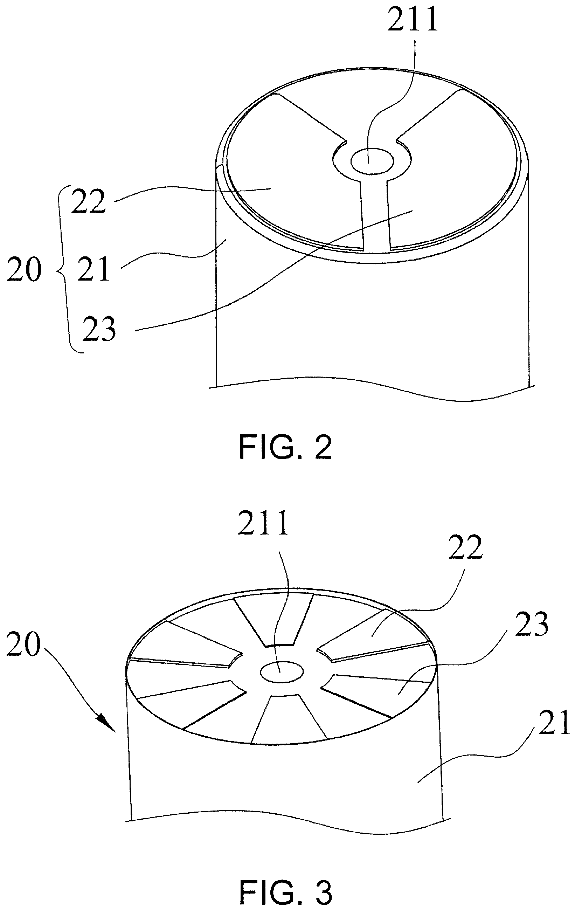

In an embodiment, as shown in FIG. 2 to FIG. 4, the winding cell 20 further includes a second tab portion 23, and the first tab portion 22 and the second tab portion 23 have opposite polarities. The first tab portion 22 and the second tab portion 23 extend from a same side of the cell body 21, and the first tab portion 22 is spaced apart from the second tab portion 23. In this way, the insulation between the first tab portion 22 and the second tab portion 23 is ensured, and short circuit problems are prevented from occurring.

The first tab portion 22 and the second tab portion 23 have opposite polarities. One of the first tab portion 22 and the second tab portion 23 is a positive tab, and the other is a negative tab. By arranging the first tab portion 22 and the second tab portion 23 to extend from the same side of the cell body 21, the problem of excessive accumulation of height space caused by the extension of the first tab portion 22 and the second tab portion 23 from opposite sides of the cell body 21 may be prevented from occurring.

In an embodiment, the first tab portion 22 is spaced apart from the second tab portion 23 in a circumferential direction of the winding cell hole 211. That is, the first tab portion 22 is spaced apart from and is arranged around the second tab portion 23 in the circumferential direction of the winding cell hole 211. In this way, the connection area between the first tab portion 22 and the second tab portion 23 is increased to the greatest extent, and it is also ensured that the first tab portion 22 and the second tab portion 23 may have a reliable current-passing area.

In an embodiment, the second tab portion 23 is formed by a plurality of second tabs gathered and connected together. The second tab among the plurality of second tabs closest to the winding cell hole 211 is a 1^{st} second tab 231. A distance between the 1^{st} second tab 231 and the winding cell hole 211 is not less than a length of the 1^{st} second tab 231 in a lead-out direction thereof. In this way, the second first tab 231 is prevented from extending and blocking the winding cell hole 211 after being bundled, the safety risk caused by wrong lapping with the first tab portion 22 of different polarities is also prevented, and the safety performance of the cylindrical battery is thus improved.

The first tab portion 22 is spaced apart from the second tab portion 23 in the circumferential direction of the winding cell hole 211. Further, the distance between the 1^{st} first tab 221 and the winding cell hole 211 is not less than the length of the 1^{st} first tab 221 in the lead-out direction thereof. The distance between the 1^{st} second tab 231 and the winding cell hole 211 is not less than the length of the 1^{st} second tab 231 in the lead-out direction thereof. Therefore, the 1^{st} first tab 221 and the 1^{st} second tab 231 are prevented from extending and blocking the winding cell hole 211 after being bundled. Further, the possibility of false contact between the 1^{st} first tab 221 and the 1^{st} second tab 231 may also be prevented from occurring to the greatest extent.

With reference to FIG. 2 to FIG. 4 together, the first tab portion 22 is spaced apart from the second tab portion 23 in the circumferential direction of the winding cell hole 211. The 1^{st} first tab 221 and the 1^{st} second tab 231 may be arranged to be opposite to each other. The 1^{st} first tab 221 and the 1^{st} second tab 231 may also be arranged to be adjacent to each other. The specific positional relationship between the 1^{st} first tab 221 and the 1^{st} second tab 231 is not limited.

In an embodiment, the distance between the 1^{st} first tab 221 and the winding cell hole 211 is basically equal to the distance between the 1^{st} second tab 231 and the winding cell hole 211. In this way, in the process of forming the first tab portion 22 and the second tab portion 23 by winding, the 1^{st} first tab 221 and the 1^{st} second tab 231 may be present in the same circle, so as to facilitate the winding of the winding cell 20. Further, the difficulty of designing the timing of the presence of the 1^{st} first tab 221 and the 1^{st} second tab 231 before winding to form the winding cell 20 is also lowered.

In an embodiment, the distance between the 1^{st} first tab 221 and the winding cell hole 211 is not equal to the distance between the 1^{st} second tab 231 and the winding cell hole 211. That is, in the process of forming the first tab portion 22 and the second tab portion 23 by winding, the 1^{st} first tab 221 and the 1^{st} second tab 231 may not be present in the same circle. In this way, by controlling the distances between the 1^{st} first tab 221 and the 1^{st} second tab 231 and the winding cell hole 211, an insulation distance between the 1^{st} first tab 221 and the 1^{st} second tab 231 may be controlled to improve the safety performance of the battery.

In an embodiment, a radian of the 1^{st} first tab 221 is less than 2π, and a radian of the 1^{st} second tab 231 is less than 2π. In this way, a reliable insulation distance is ensured between the 1^{st} first tab 221 and the 1^{st} second tab 231 to avoid battery safety issues.

The 1^{st} first tab 221 and the 1^{st} second tab 231 may be on the same turn of the winding cell 20. Herein, a sum of the radians of the 1^{st} first tab 221 and the 1^{st} second tab 231 is less than 2π.

The 1^{st} first tab 221 and the 1^{st} second tab 231 may be on different turns of the winding cell 20. Herein, the sum of the radians of the 1^{st} first tab 221 and the 1^{st} second tab 231 may be less than 2π.

In some embodiments, it is not excluded that the sum of the radians of the 1^{st} first tab 221 and the 1^{st} second tab 231 may be greater than 2π. For instance, the first tab portion 22 may be a first ring-shaped structure located on the cell body 21 close to the winding cell hole 211, and the second tab portion 23 may be a second ring-shaped structure located on the cell body 21 away from the winding cell hole 211. Herein, the sum of the radians of the 1^{st} first tab 221 and the 1^{st} second tab 231 may be equal to 4π.

The first tab portion 22 may be a first ring-shaped structure located on the cell body 21 close to the winding cell hole 211, and the second tab portion 23 may be a second ring-shaped structure located on the cell body 21 away from the winding cell hole 211. The distance between the 1^{st} first tab 221 of the first tab portion 22 and the winding cell hole 211 is not less than the length of the 1^{st} first tab 221 in the lead-out direction thereof. The distance between the 1^{st} second tab 231 of the second tab portion 23 and the first tab portion 22 is not less than the length of the 1^{st} second tab 231 in the lead-out direction thereof. In this way, the 1^{st} second tab 231 is prevented from contacting the first tab portion 22 after being gathered in a direction close to the winding cell hole 211.

In an embodiment, as shown in FIG. 2, one first tab portion 22 is provided, and one second tab portion 23 is provided. In this way, a simple structure is provided, and on the basis of ensuring the insulation gap between the first tab portion 22 and the second tab portion 23, it can also be ensured that the first tab portion 22 and the second tab portion 23 have a reliable current-passing capability.

In an embodiment, a plurality of first tab portions 22 are provided, and a plurality of second tab portions 23 are provided. The plurality of first tab portions 22 and the plurality of second tab portions 23 may be arranged at intervals in the circumferential direction of the winding cell hole 211. On the basis of ensuring the insulation gaps between the first tab portions 22 and the second tab portions 23, it can also be ensured that the first tab portions 22 and the second tab portions 23 have sufficient current-passing areas.

With reference to FIG. 3, a plurality of first tab portions 22 are provided, a plurality of second tab portions 23 are provided, and the first tab portions 22 and the second tab portions 23 may be arranged in an alternating manner.

Alternatively, a plurality of first tab portions 22 are provided, a plurality of second tab portions 23 are provided, the first tab portions 22 may be arranged adjacently and sequentially, and the second tab portions 23 may be arranged adjacently and sequentially.

It should be noted that in some embodiments, it is not excluded that the first tab portion 22 and the second tab portion 23 may extend from opposite sides of the cell body 21. In this case, both the first tab portion 22 and the second tab portion 23 may be ring-shaped. Certainly, it is not excluded that the first tab portion 22 and the second tab portion 23 may be non-closed structures in the circumferential direction.

In an embodiment, the battery includes a winding cell and an electrolyte, and the battery is the smallest unit capable of performing electrochemical reactions such as charging/discharging.

The cell body 21 includes a plurality of stacked units, and the plurality of stacked units are wound to form the cell body 21. The stacked units are connected in the circumferential direction of the winding cell hole 211 to form an integral structure. The cell body 21 defined herein includes a plurality of stacked units, and each stacked unit forms a ring structure of the cell body 21.

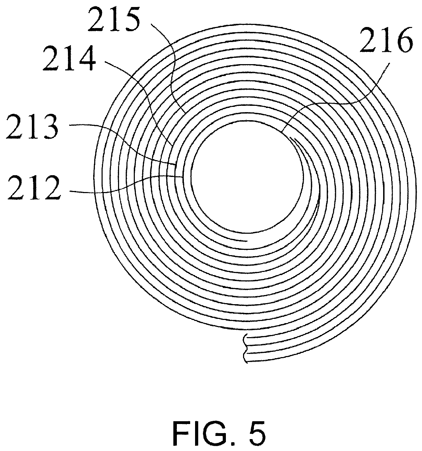

With reference to FIG. 5, in the radial direction of the winding cell hole 211, the stacked units include a first electrode piece 212, a first separator 213, a second electrode piece 214, and a second separator 215 arranged in sequence. The stacked units may be wound on the winding cell rod body 216 to form the winding cell 20. For instance, the first electrode piece 212 may be located at the innermost layer of the cell body 21. The first separator 213 and the second separator 215 effectively isolate the first electrode piece 212 and the second electrode piece 214. Lengths of the first separator 213 and the second separator 215 may be greater than the lengths of the first electrode piece 212 and the second electrode piece 214. The first electrode piece 212 and the second electrode piece 214 have opposite polarities. One of the first electrode piece 212 and the second electrode piece 214 is a positive electrode piece, and the other is a negative electrode piece.

In an embodiment, wherein a distance between the n^{th} first tab and a centerline of the winding cell hole 322 is rₙ = r₁+a (ϕₙ-ϕ₁), where n is a distance between the 1^{st} first tab 221 and the centerline of the winding cell hole 211, a=k/2n, k is a thickness of the stacked units, ϕₙ is an angle at which the n^{th} first tab is wound from a winding starting point of the stacked units, and ϕ₁ is an angle at which the 1^{st} first tab 221 is wound from the winding starting point of the stacked units. By calculating ϕₙ-ϕ₁, the bypassed angle of each stacked unit between the n^{th} first tab and the 1^{st} first tab 221 can be obtained, and the number of layers bypassed by the stacked units between the n^{th} first tab and the 1^{st} first tab 221 can be further determined. By obtaining the distance between the 1st first tab 221 and the centerline of the winding cell hole 211 and by calculating the distance between the 1^{st} first tab 221 and the centerline of the winding cell hole 211 and the sum of the thicknesses of the stacked units between the n^{th} first tab and the 1^{st} first tab 221, the precise distance between the n^{th} first tab and the centerline of the winding cell hole 211 can be obtained.

The angle of ϕₙ-ϕ₁ is a natural multiple of 360°, and r₁ is the distance between the 1^{st} first tab 221 and the centerline of the winding cell hole 211. The distance between the 1^{st} first tab 221 and the centerline of the winding cell hole 211 is the smallest, and the side of the 1^{st} first tab 221 facing the winding cell hole 211 is exposed. Therefore, the distance r₁ between the 1^{st} first tab 221 and the centerline of the winding cell hole 211 can be a distance value obtained by measurement, for example, when n=1, the angle ϕₙ-ϕ₁ is 0, and rₙ= r₁ herein.

In an embodiment, as shown in FIG. 5, the stacked units include the first electrode piece 212, the first separator 213, the second electrode piece 214, and the second separator 215 arranged in sequence. The first separator 213 and the second separator 215 effectively isolate the first electrode piece 212 and the second electrode piece 214, so that the safety performance of the winding cell 20 is ensured, k is a sum of thicknesses of the first electrode piece 212, the first separator 213, the second electrode piece 214, and the second separator 215.

In some embodiments, it is not excluded that the stacked units may include the first electrode piece 212 and the second electrode piece 214, and the first electrode piece 212 and the second electrode piece 214 may be in direct contact, k is the sum of the thicknesses of the first electrode piece 212 and the second electrode piece 214.

In an embodiment, the first tab portion 22 extends from the first electrode piece 212. The distance between the 1^{st} first tab 221 and the winding cell hole 211 is b, b=aϕ, ϕ=ϕ₁-ϕ₀, and ϕ₀ is a winding angle from the winding starting point to a predetermined position point. In a winding direction of the stacked units, a connection line is formed between an end of the 1^{st} first tab 221 close to the winding starting point and the centerline of the winding cell hole 211. The predetermined position point is an intersection point formed by the connection line and the stacked unit close to the winding cell hole 211, where 0≤ϕ₀ < 360°.

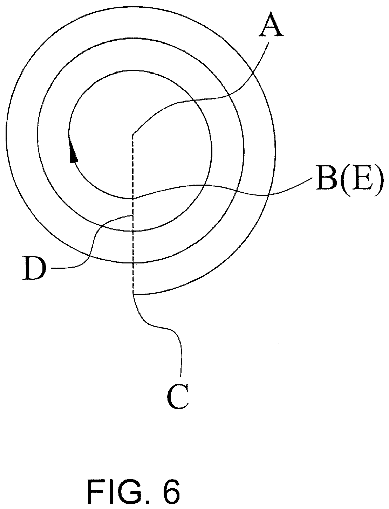

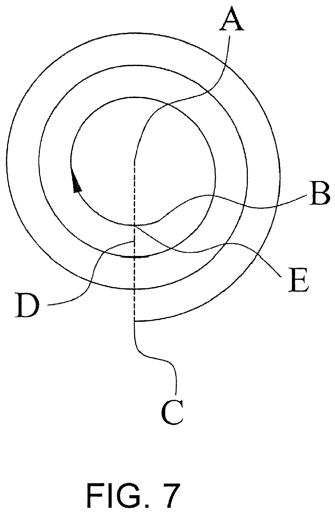

With reference to FIG. 6 and FIG. 7 together, the centerline of the winding cell hole 211 is denoted as A, the winding starting point is denoted as B, one end of the 1^{st} first tab 221 close to the winding starting point is denoted as C, and the connection line between one end of the 1^{st} first tab 221 close to the winding starting point and the centerline of the winding cell hole 211 is denoted as D. The intersection point formed by the connection line and the stacked unit close to the winding cell hole 211 is the predetermined position point E. The winding direction of the stacked unit may be indicated by the arrows shown in FIG. 6 and FIG. 7.

As shown in FIG. 6, the winding starting point B may overlap the predetermined position point E. In this case, the winding angle from the winding starting point B to the predetermined position point E is 0, and the angle ϕ₁ at which the 1^{st} first tab 221 is wound from the winding starting point B of the stacked units may be a natural multiple of 360°. For instance, as shown in FIG. 6, ϕ₁ may be 3×360°. In this case, ϕ can be 3×360°, and a=k/2π, where k is the thickness of the stacked units, that is, the sum of the thicknesses of the first electrode piece 212, the first separator 213, the second electrode piece 214, and the second separator 215. Therefore, it can be obtained that the distance between the 1^{st} first tab 221 and the winding cell hole 211 is b, where b=3k.

With reference to FIG. 7, the winding starting point B may not overlap the predetermined position point E. In this case, the winding angle from the winding starting point B to the predetermined position point E is ϕ₀, and the angle ϕ₁ at which the 1^{st} first tab 221 is wound from the winding starting point B of the stacked units may be ϕ₁, and ϕ₁-ϕ₀ is a natural multiple of 360°. For instance, as shown in FIG. 7, ϕ can be 3×360°, and a=k/2π, where k is the thickness of the stacked units, that is, the sum of the thicknesses of the first electrode piece 212, the first separator 213, the second electrode piece 214, and the second separator 215. Therefore, it can be obtained that the distance between the 1^{st} first tab 221 and the winding cell hole 211 is b, where b=3k.

In an embodiment, as shown in FIG. 1, the cylindrical battery further includes a terminal component 30, and the terminal component 30 may disposed on the battery casing 10. The winding cell 20 may be electrically connected to terminal component 30. For instance, the first tab portion 22 of the winding cell 22 may be electrically connected to terminal component 30. The terminal component 30 and the battery casing 10 are insulated from each other. Further, the second tab portion 23 of the winding cell 20 may be electrically connected to the battery casing 10.

The cylindrical battery may include two terminal components 30, and the first tab portion 22 and the second tab portion 23 of the winding cell 20 may be electrically connected to the two terminal components 30.

In an embodiment, the battery casing 10 may include a cover plate and a casing member. The terminal component 30 may be disposed on the cover plate, and the casing member may be formed with an accommodating space. In this way, after the cover plate is connected to the casing member, the winding cell 20 may be effectively protected. The cover plate and the casing member may be welded, or the cover plate and the casing member may be riveted.

An embodiment of the disclosure further provides a battery apparatus including the abovementioned cylindrical battery.

The cylindrical battery of the battery apparatus provided by an embodiment of the disclosure includes the battery casing 10 and the winding cell 20, and the winding cell 20 is disposed in the battery casing 10. The winding cell 20 includes the cell body 21 and the first tab portion 22. The first tab portion 22 extends from one side of the cell body 21, and the cell body 21 is formed with the winding cell hole 211. The first tab portion 22 may be formed by a plurality of first tabs. By making the distance between the 1^{st} first tab 221 and the winding cell hole 211 not less than the length of the 1^{st} first tab 221 in the lead-out direction thereof, the 1^{st} first tab 221 is prevented from extending and blocking the winding cell hole 211 after being bundled, and the electrolyte infiltration rate of the winding cell 20 is also prevented from being affected. Further, the safety risk caused by wrong lapping with tabs or electrode pieces of different polarities is also prevented, and the safety performance of the battery apparatus is thus improved.

In an embodiment, the battery apparatus is a battery module or a battery pack.

The battery module includes a plurality of cylindrical batteries. The battery module may also include a bracket, and the batteries may be fixed on the bracket.

The battery pack includes a plurality of cylindrical batteries and a box, and the box is configured to fix the cylindrical batteries.

Note that the battery pack includes cylindrical batteries, there may be a plurality of cylindrical batteries, and the plurality of cylindrical batteries are arranged in the box. Herein, the cylindrical batteries may be mounted in the box after forming a battery module. Alternatively, the cylindrical batteries may be directly arranged in the box, that is, the cylindrical batteries are not required to be arranged into groups, and the box is used to fix the cylindrical batteries.

Other embodiments of the disclosure will be apparent to those skilled in the art from consideration of the specification and practice of the disclosure disclosed herein. The disclosure is intended to cover any variations, uses or adaptations of the disclosure. These variations, uses, or adaptations follow the general principles of the disclosure and include common general knowledge or conventional technical means in the art that are not disclosed in the present disclosure.

## Claims

1. A cylindrical battery, comprising:
a battery casing (10); and
a winding cell (20) disposed in the battery casing (10) and comprising a cell body (21) and a first tab portion (22), wherein the first tab portion (22) extends from one side of the cell body (21), and the cell body (21) is formed with a winding cell hole (211),
wherein in a radial direction of the winding cell hole (211), the first tab portion (22) is formed by a plurality of first tabs gathered and connected together, the first tab among the plurality of first tabs closest to the winding cell hole (211) is a 1^{st} first tab (221), and a distance between the 1^{st} first tab (221) and the winding cell hole (211) is not less than a length of the 1^{st} first tab (221) in a lead-out direction thereof.

2. The cylindrical battery according to claim 1, wherein the distance between the 1^{st} first tab (221) and the winding cell hole (211) is 3 mm to 10 mm.

3. The cylindrical battery according to claim 1, wherein the winding cell (20) further comprises a second tab portion (23), the first tab portion (22) and the second tab portion (23) have opposite polarities, the first tab portion (22) and the second tab portion (23) extend from a same side of the cell body (21), and the first tab portion (22) is spaced apart from the second tab portion (23).

4. The cylindrical battery according to claim 3, wherein the first tab portion (22) is spaced apart from the second tab portion (23) in a circumferential direction of the winding cell hole (211), the second tab portion (23) is formed by a plurality of second tabs gathered and connected together, the second tab among the plurality of second tabs closest to the winding cell hole (211) is a 1^{st} second tab (231), and a distance between the 1^{st} second tab (231) and the winding cell hole (211) is not less than a length of the 1^{st} second tab (231) in a lead-out direction thereof.

5. The cylindrical battery according to claim 4, wherein the distance between the 1^{st} first tab (221) and the winding cell hole (211) is basically equal to the distance between the 1^{st} second tab (231) and the winding cell hole (211).

6. The cylindrical battery according to claim 4, wherein the distance between the 1^{st} first tab (221) and the winding cell hole (211) is not equal to the distance between the 1^{st} second tab (231) and the winding cell hole (211).

7. The cylindrical battery according to claim 4, wherein a radian of the 1^{st} first tab (221) is less than 2π, and a radian of the 1^{st} second tab (231) is less than 2π.

8. The cylindrical battery according to claim 3, wherein a plurality of first tab portions (22) are provided, a plurality of second tab portions (23) are provided, and the plurality of first tab portions (22) and the plurality of second tab portions (23) are arranged at intervals in the circumferential direction of the winding cell hole (211).

9. The cylindrical battery according to claim 1, wherein the cell body (21) comprises a plurality of stacked units, and the plurality of stacked units are wound to form the cell body (21),
wherein a distance between the n^{th} first tab and a centerline of the winding cell hole (211) is rₙ = rₙ=r₁+ a ((pₙ-φ₁), where r₁ is a distance between the 1^{st} first tab (221) and the centerline of the winding cell hole (211), a=k/2π, k is a thickness of the stacked units, ϕₙ is an angle at which the n^{th} first tab is wound from a winding starting point of the stacked units, and ϕ₁ is an angle at which the 1^{st} first tab (221) is wound from the winding starting point of the stacked units.

10. The cylindrical battery according to claim 9, wherein the stacked units comprise a first electrode piece (212), a first separator (213), a second electrode piece (214), and a second separator (215) arranged in sequence, and k is a sum of thicknesses of the first electrode piece (212), the first separator (213), the second electrode piece (214), and the second separator (215).

11. The cylindrical battery according to claim 10, wherein the first tab portion (22) extends from the first electrode piece (212), the distance between the 1^{st} first tab (221) and the winding cell hole (211) is b, where b=acp and ϕ=ϕ₁-ϕ₀, ϕ₀ is a winding angle from the winding starting point to a predetermined position point, in a winding direction of the stacked units, a connection line is formed between an end of the 1^{st} first tab (221) close to the winding starting point and the centerline of the winding cell hole (211), and the predetermined position point is an intersection point formed by the connection line and the stacked unit close to the winding cell hole (211), where 0≤ϕ₀ < 360°.
